# EUROPEAN PATENT SPECIFICATION

(11) **EP 0 246 661 B1**
(45) Date of publication and mention of the grant of the patent: **14.12.1994**
(21) Application number: 87107501.6
(22) Date of filing: 22.05.1987
(51) Int. Cl.: G11B 27/036, G11B 5/86, G11B 20/10, G11B 15/18, G11B 27/30

(54) **Apparatus for recording information signals**
Gerät zur Aufzeichnung von Informationssignalen
Appareil pour enregistrer des signaux d'informations

(30) Priority: 23.05.1986 JP 118699/86
(43) Date of publication of application: 25.11.1987
(73) Proprietor: SONY CORPORATION, Tokyo 141 (JP)
(72) Inventor: Ito, Yuji, Shinagawa-ku Kanagawa-ken Tokyo (JP); Okada, Hiroshi, Shinagawa-ku Kanagawa-ken Tokyo (JP)
(74) Representative: Schmidt-Evers, Jürgen, Dipl.-Ing.

(56) References cited:
- EP-A- 0 084 952
- EP-A- 0 098 727
- EP-A- 0 183 411
- GB-A- 2 097 968
- GB-A- 2 115 595
- US-A- 4 533 963
- US-A- 4 575 772

## Description

### Field of the Invention

This invention relates to an information recording device for a so-called 8 mm video tape recorder (VTR) in which record areas for the video signals and record areas for the PCM signals are formed on skewed record tracks formed on the magnetic tape by the rotary magnetic head.

### Description of the Prior Art

So far, what is called 8 mm video tape recorders (VTRs) are known in the art, wherein skewed recording tracks formed on the magnetic tape by the rotary magnetic head are dividedinto two record sections for recordingvideo signals and PCM signals separately.

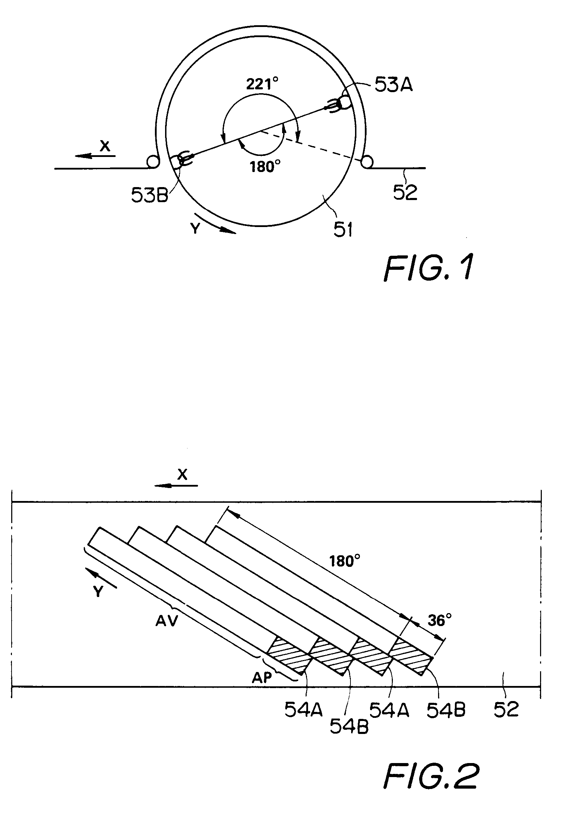

In these 8 mm VTR's, as shown in Fig. 2, a magnetic tape 52 is wound spirally over an angular extent of 221° on the peripheral surface of a drum 51 of a rotary magnetic head unit, and the tape 52 is transported at a constant speed in the direction of an arrow mark X. A pair of rotary magnetic heads 53A and 53B are mounted on the drum 51 with different azimuth angles and at an angular interval of 180° to each other, these magnetic heads being rotated at a constant speed in the direction of an arrow mark Y at a frame frequency of 30 Hz. Video and audio signals may be recorded or reproduced through skewed recording tracks on the magnetic tape traced by the rotary magnetic heads 53A and 53B.

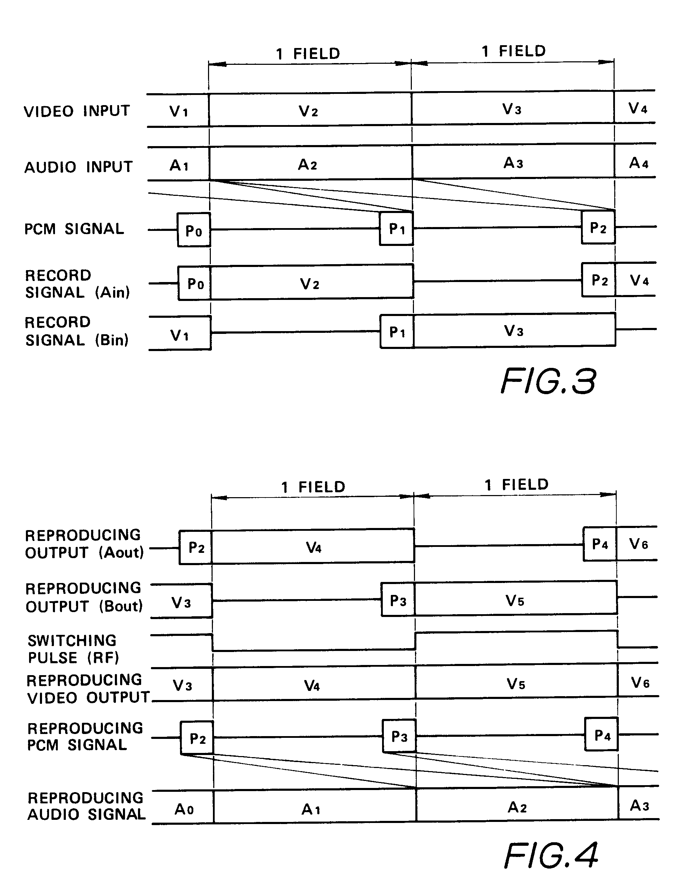

On the magnetic tape 52, there are alternately formed skewed recording tracks 54A and 54B corresponding to an angular extent of 221 and adapted to be traced by the rotary magnetic heads 53A and 53B at the time of recording, respectively, as shown in Fig.2. In such 8 mm VTR, audio signals associated with video signals one field before are recorded after pulse code modulation and time base compression in a record section AP corresponding to about 36° on the tracing start side of the angular extent of 221°, while the one-field color video signals and FM audio signals are recorded in the remaining record section AV of 180°, as shown in Fig. 3. The above described VTR has been known from US patent 4551771 issued on November 5, 1985. On the skewed recording tracks 54A and 54B, traced by the rotary magnetic heads 53A and 53B, there are recorded pilot signals as tracking control signals or automatic track finding (ATF) signals simultaneously with the aforementioned audio and video signals, where these pilot signals having four different frequencies can be switched cyclically for each track. During reproduction, the skewed recording tracks 54A and 54B on the magnetic tape 2 are alternately traced by the rotary magnetic heads 53A and 53B to produce playback output signals, while tracking control is performed on the basis of the aforementioned ATF signals. The PCM signals are converted into analog signals after the expansion along the time axis or time base expansion. Usually, the PCM audio signals in the 8 mm VTR are recorded with a one-filed delay with respect to the record video signals for performing a time base compression at the recording system, while they are reproduced with one-field delay with respect to the playback video signals for performing a time base expansion at the reproducing system.

As disclosed in the US Patent 4562578 issued on December 31, 1985, the PCM audio signals used in the 8 mm VTR are subjected to error correction processing using so-called cross interleaving according to which index words ID are annexed to 1050-word digital audio signals L and R for one field obtained by digitizing stereo audio signals, the thus digitized data are scrambled, parity data Q, P and error correction code CRC are added thereto and the resulting data are then converted into serial data for transmission.

However, in the magnetic recording device such as the above described 8 mm VTR wherein the skewed or inclined recording tracks formed on the magnetic tape by the rotary magnetic head are divided into two sections so that the video signals are recorded in one of these sections and the PCM signals are recorded in the other section, since the error correction codes are added to the PCM signals, it is necessary to change the error correction code when certain data in the PCM signals are to be changed, otherwise it becomes impossible to undertake the error correction processing at the time of reproduction. In general, it is impossible to change or post-record a part of the prerecorded data. In addition, since the companding along the time axis and the error correction processing are required in recording and reproducing the PCM signals, video signals are subject to time delay of two fields, that is, one field each for recording and reproduction, such that the deviation in timing of the audio signals with respect to the video signals is increased with repetition of dubbing operations.

In the preamble of claim 1 the disclosure of EP-A-0 098 727 is refered to since this prior art discloses a helical scan magnetic recording system. This system is provided with audio signal processing means, video signal processing means, two main rotary heads, two auxiliary rotary heads, switching means and control means to control said switching means. In this system, video signals are recorded in a plurality of successive tracks and respective audio signals are recorded in compressed form in the extensions of the video tracks. Thus, the audio signals are not recorded synchroniously to the video signals. The auxiliary heads are located ahead of the mainheads in order to reach the audio signals sufficiently in advance of the main heads to allow restauration of the original audio-video synchronism, when the system reproduces the recorded information.

Furthermore in EP-A-0 183 411, which falls under Art. 54(3) and is therefore not relevant to the question of inventive step, a digital video tape recorder is disclosed in which a reproduced audio signal which is already recorded on the tape can be edited. This editing is processed in such a manner, that the reproduced signal is supplied to mixing means. In the mixing means the signal is mixed with an externally supplied signal.

In US-A 4,575,772 the recording of the audio singal is then explained in more detail. It is stated therein that at the beginning of the audio signal a synchronizing signal for the clock pulse generator is firstly recorded and then a synchronizing signal which indicates the beginning of the data. Subsequently, a ID signal is recorded which is produced in an ID generator and then supplied to the audio processor. It is further stated that in order to separate single areas in the audio signal, each of which must be occupied for example by the left or right channel of a stereo recording, separation is effected by means of a cyclic redundancy code (CRC). Otherwise, however, only statements are made in this document as to how to proceed when post-processing the video signal.

It is therefore an object of the present invention to overcome the aforementioned problems of the prior art and to provide a novel information recording device wherein the dubbing operation may be performed with a correct correspondence between the video and PCM signals and wherein the editing operation such as changing part of the data in the PCM signals may be performed by a more simplified operation.

In view of such object, the present invention provides
an apparatus for recording information signals comprising at least an audio signal in a plurality of successive tracks on a recording medium, comprising; first audio signal processing means for converting an original audio signal into digital form; video signal processing means for processing a video signal of said information signal to produce an oupout video signal; at least two main rotary heads for recording said output video signal and said digitized audio signal on said recording medium; at least two auxiliary rotary heads for reproducing said digitized audio signal recorded in said plurality of successive tracks on said recording medium, said auxiliary rotary heads being placed or positioned ahead of said main heads relative to the transporting direction of said medium; first switch means for supplying said output video signal and said digitized audio signal to said transducer means; control means for controlling said first switch means to supply said output video signal and said digitized audio signal to said main rotary heads so that said two main heads record said output video signal in a main section of each track and the digitized audio signal in an over-scan section of each track; second audio signal processing means connected to said two auxiliary rotary heads for reconverting said digital form audio signal into a reproduced audio signal and for converting said reproduced original audio signal into the digital form audio signal; new audio signal inserting means for mixing or replacing said reproducing original audio signal with or by said new audio signal, and second switch means or switching said digitized audio signal form said first audio signal processing means with said newly digitized audio signal from said second audio signal processing means.

According to a preferred embodiment of the present invention, the playback signals at least two fields before the playback signals obtained by the regular rotating magnetic heads are obtained by auxiliary rotating magnetic heads for compensating the time delay caused by the recording and reproduction of the PCM signals performed by the regular rotating heads such that the dubbing operation may be performed with a correct coincidence between the video and PCM signals and an editing operation such as changing certain data in the PCM signals may be performed by a more simplified operation.

### Brief Description of the Drawings

Fig. 1 is a schematic view showing an arrangement of the rotary magnetic head device in a typical 8 mm VTR.

Fig. 2 is a schematic view showing a recording track pattern in the 8 mm VTR.

Fig. 3 is a timing chart showing the recording operation in the 8 mm VTR.

Fig. 4 is a timing chart showing the playback operation in the 8 mm VTR.

Fig. 5 is a block diagram of a preferred embodiment of the present invention when applied to the 8 mm VTR.

Fig. 6 is a schematic view showing the rotary magnetic head tracing the tape in the embodiment of Fig. 5.

Fig. 7 is a timing chart for explaining the PCM signal rewriting operation in the embodiment of Fig. 5.

Fig. 8 is a schematic view for explaining the insert editing processing operation for video signals in the embodiment of Fig. 5.

Fig. 9 is a schematic diagram showing a modified recording track pattern.

Fig. 10 is a block diagram of a modified embodiment of the present invention in which the recording operation is performed using the recording track pattern shown in Fig. 9.

### Description of the Preferred Embodiment

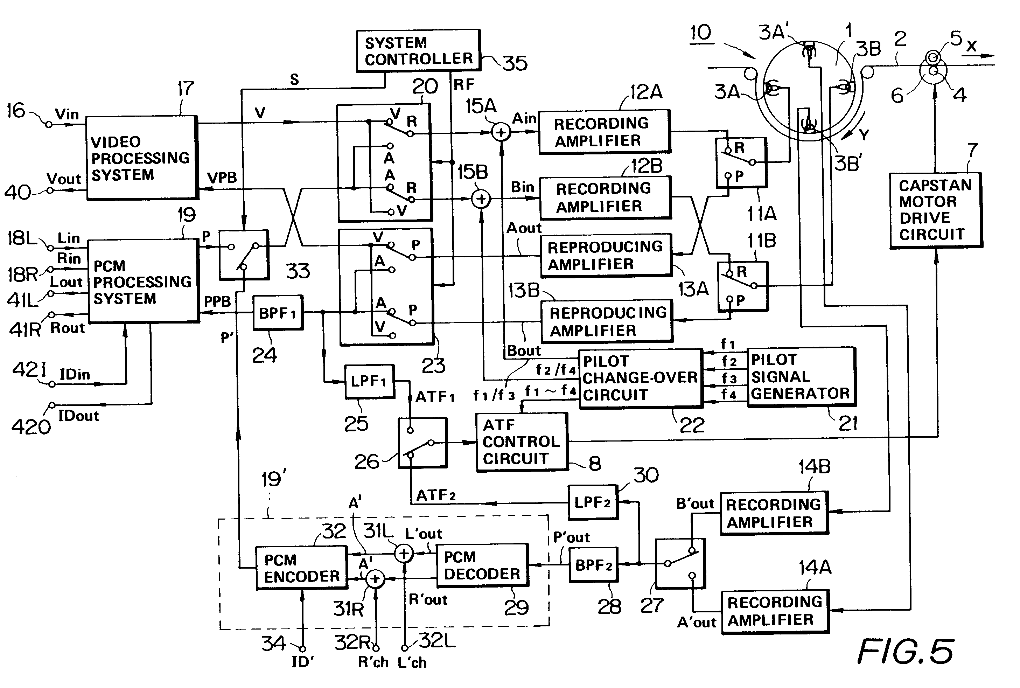

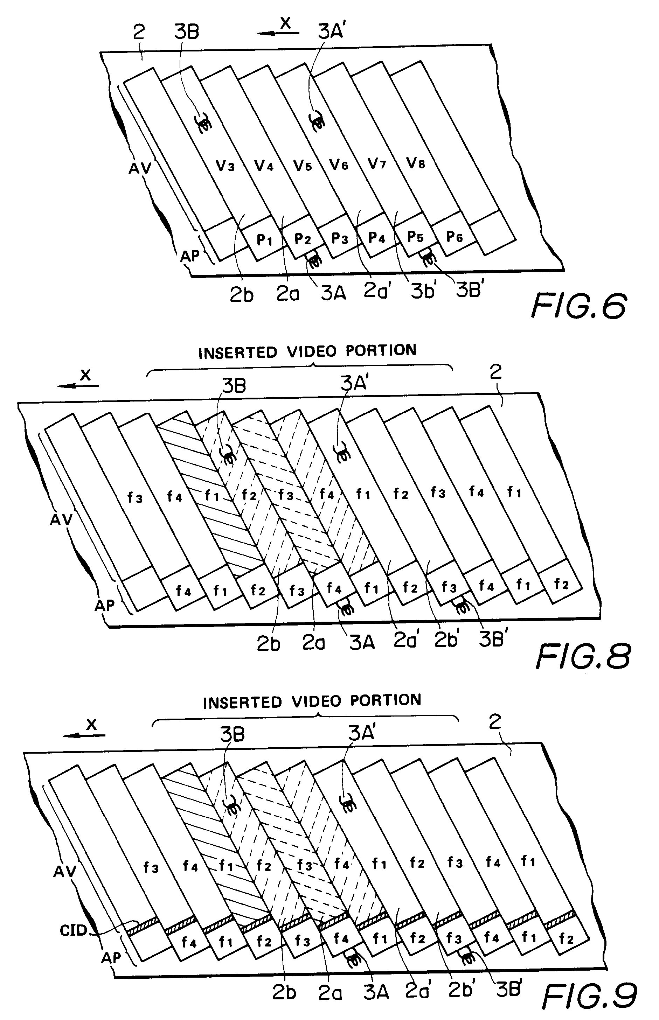

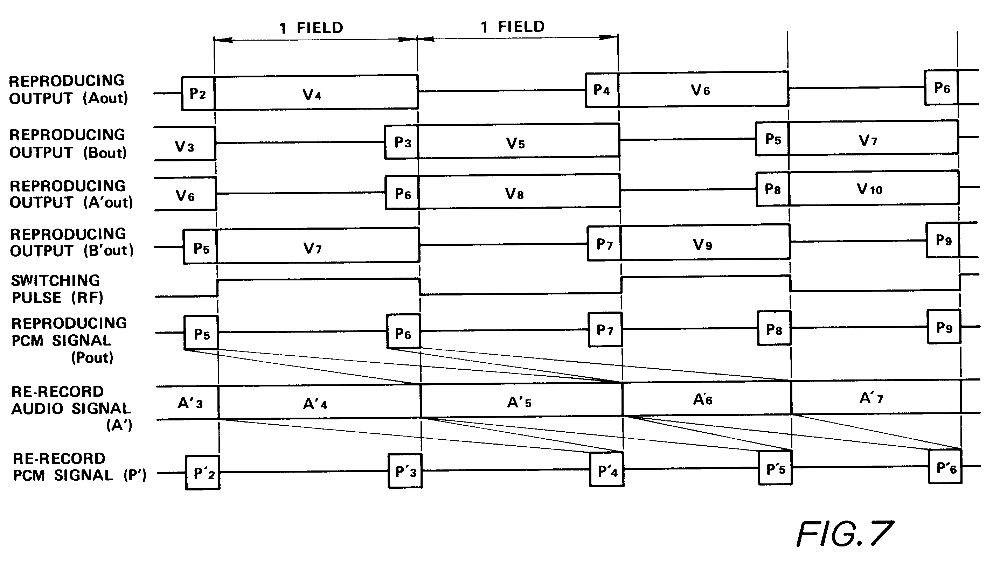

In Figs. 5 to 8, there is shown an embodiment of the present invention when applied to a 8 mm VTR in which, as shown in the block diagram of Fig. 5, there is provided a rotary magnetic head device 10 having a drum 1 on the periphery of which a magnetic tape 2 is wound spirally over an angular extent of 221°, and a pair of rotary magnetic heads 3A and 3B mounted at an angular interval of 180° to each other on the drum 1 and having different azimuth angles may be used for recording or reproduction in accordance with a so-called 8 mm formatting.

In the present embodiment, the magnetic tape 2 is held between a capstan 4 and a pinch roll 5 and, as the capstan 4 is driven into rotation by a capstan motor 6, the tape is transported at a constant speed in the direction of an arrow mark X in Fig. 1. The driving current is supplied to the capstan motor 6 by a capstan motor drive circuit 7 which is subjected to a capstan servo control such that, during the recording mode of operation, the capstan motor 6 is driven at a constant speed and, during the reproducing mode of operation, the rotational speed of the capstan motor 6, that is, the running speed of the magnetic tape 2, is changed in accordance with ATF error signals supplied from an ATF control circuit 8, thus providing a tracking control in a known manner.

On the drum 1 of the rotary magnetic head unit 10, there are also mounted a pair of auxiliary heads 3A′, 3B′ at an angular interval of 180° relative to each other. These auxiliary rotary heads are adapted for tracing skewed record tracks 2a′ and 2b′ on which there are recorded signals at least two fields before skewed record tracks 2a and 2b on the tape 2 traced by the rotary heads 3A and 3B. The description "two fields before" means that the tracks 2a′ and 2b′ are two fields ahead of or in the upstream side of the tracks 2a and 2b when viewed in the tape transport direction. The drum 1 is driven into rotation in the direction of an arrow mark Y at a frame frequency of 30 Hz by a drum motor, not shown.

The pair of the rotary heads 3A and 3B provided to the drum 1 are connected through terminal R and P of mode changeover switches 11A and 11B to recording amplifiers 12A and 12B and to reproducing amplifiers 13A and 13B, respectively. The pair of the auxiliary rotary heads 3A′ and 3B′ are connected to reproducing amplifiers 14A and 14B, respectively. These mode changeover switches 11A and 11B are controlled by a system controller 35 such that the recording amplifiers 12A and 12B are selected during the recording mode of operation and the reproducing amplifiers 13A and 13B are selected during the reproducing mode of operation.

To these recording amplifiers 12A and 12B, record signals Ain and Bin are supplied from signal adders 15A and 15B during the recording mode of operation, respectively. To these signal adders 15A and 15B, video signals V obtained after the signal recording processing in a video processing system 17 of input video signals Vin supplied to a video input terminal 16, or PCM signals P obtained after pulse code modulation or cross interleaving at a PCM processing system 19 of stereo audio signals Lin and Rin supplied to audio input terminals 18L and 18R, are supplied as record signals from a changeover switch 33 through respective terminals V, A and R of a changeover circuit 20. On the other hand, ATF pilot signals having four different frequencies f₁/f₃ and f₂/f₄ are selectively supplied to the signal adders 15A and 15B from a tracking pilot signal generator 21 through a pilot changeover circuit 22. These ATF pilot signals are sequentially superimposed on the aforementioned record signals to form the record signals Ain and Bin to be recorded by the pair of rotary heads 3A and 3B.

The PCM processing system 19 includes an input terminal 42I and an output terminal 42O, for index signals ID. The index signals IDin supplied from the input terminal 42I are interleaved and encoded in the aforementioned PCM signals P similarly to the ID words shown for example in US patent 4562587. These index signals ID include data showing whether PCM audio signals processed by the PCM processing system 19 are stereophonic, monaural or bi-lingual, dubbing protect ID signals indicating inhibition of duplication, address codes indicating the record position on the tape, and timing codes.

The reproducing amplifiers 13A and 13B are connected through terminals P, V and A of the head changeover circuit 23 to the video processing system 17 and to the PCM processing system 19. The reproducing amplifiers 13A and 13B are connected to the aforementioned video processing system 17 and the PCM processing system 19 through the terminals P and V of the head changeover circuit 23 while being connected through the terminal A of the head changeover circuit 23 and a bandpass filter (BPF₁) 24 to the PCM processing system 19. The reproducing amplifiers 13A and 13B are also connected through terminal A of the head changeover circuit 23, a low pass filter (LPF₁) 25 and a changeover switch 26 to the ATF control circuit 8.

The reproducing amplifiers 14A and 14B are connected through terminal A of a head changeover circuit 27 and a bandpass filter (BPF₂) 28 to a PCM decoder 29, while also being connected through the head changeover circuit 27, a low pass filter (LPF₂) 30 and the changeover switch 26 to the ATF control circuit 8.

The PCM decoder 29 operates so that stereo signals L′out and R′out are reproduced from PCM signals P′out included in playback output signals A′out and B′out obtained at the pair of the auxiliary rotary heads 3A′ and 3B′, these playback signals being supplied through signal adders 31L and 31R to a PCM encoder 32. To these signal adders 31L and 31R, there are supplied editing stereo-audio signals L′ch and R′ch at edit input terminals 32L and 32R. Index data ID′ are supplied to the PCM encoder 32 through an index terminal 34. In the signal adders 31L and 31R, the playback stereo audio signals L′out and R′out are added to or replaced by the editing stereo audio signals L′ch and R′ch to form playback audio signals A′ that are then subjected to a second pulse code modulation or crossleaving to form PCM signals used for re-recording P′. These re-recording PCM signals P′ thus formed at the PCM encoder 32 are supplied through a changeover switch 35 and the head changeover circuit 20 to the signal adders 15A and 15B.

The index data ID′ supplied to the index input terminal 34 are signals of the same nature as the index signals ID. Thus the PCM decoder 29, the signal adders 31L and 31R and the PCM encoder 32 make up a PCM processing system 19′ capable of performing data processing similar to that performed by the processing system 19.

In the present embodiment, the head changeover circuits 20, 23 and 27 are switched in their operation at each half revolution or at each one-field period by a frame-period switching pulse RF that is reversed in polarity at each half revolution of the rotary head unit 10.

During the recording mode of operation, the record video signals V introduced at a video input terminal 16 through the video processing system 17 and the record PCM signals P introduced at the audio input terminals 18L and 18R through the PCM processing system 19 are switched by the head changeover circuit 20 at a one-field interval and the ATF pilot signals of the four different frequencies f₁ to f₄ cyclically switched by the signal adders 15A and 15B are superimposed on the selected one of the signals V and P to form record signals Ain and Bin, these signals being then supplied through recording amplifiers 12A and 12B to the pair of rotary heads 3A and 3B, respectively. In accordance with the 8 mm VTR format, the pair of the rotary magnetic heads 3A and 3B are operated for obliquely and alternately tracing the magnetic tape 2 wound spirally about the outer periphery of the drum 1 through an angular extent of 221°, such that PCM signals P obtained after pulse code modulation and time base compression of audio signals corresponding to the video signals one field before are recorded on a record section AP of the angular extent of about 36° on the trace start side, while video signals obtained after superposition of the one-field video signals V, FM audio signals and ATF signals for tracking control are recorded on a record section AV of the succeeding angular extent of 180°.

During the reproducing mode of operation, the pair of therotary magnetic heads 3A and 3B are operated for sequentially tracing the skew recording tracks 2A and 3B on the magnetic tape 2 to produce playback outputs Aout and Bout that are then switched alternately by the head changeover circuit 23 to form playback video output signals VPB and playback video PCM signals PPB for the respective fields. Playback video output signals Vout are output at a video output terminal 40 through the video processing system 17. The playback PCM signals PPB are subjected to a playback processing such as de-interleaving at the PCM processing system 19 so that playback stereo audio signals Lout and Rout are output at audio output terminals 41L and 41R. The PCM processing system 19 also outputs playback index signals ID out through the output terminal 42O to a system controller for mode control, not shown.

In the present embodiment, during the editing mode of operation, that is, the mode of operation in which video or audio signals on the already recorded magnetic tape 2 are rewritten partially, the skewed recording tracks 2A′ and 2B′, on which are recorded signals at least two fields before the skewed recording tracks 2A and 2B traced by the pair of rotary heads 3A and 3B, are traced by the pair of auxiliary rotary heads 3A′ and 3B′ to form playback output signals A′out and B′out, respectively. These playback output signals are de-interleaved by a PCM decoder 29 to reproduce stereo audio signals L′out and R′out.

The editing stereo audio signals L′ch and R′ch supplied from the editing input terminals 32L and 32R are summed to or replaced by the playback stereo audio signals L′out and R′out at the signal adders 31L and 31R to form re-record audio signals A′. These re-record audio signals A′ are subjected to secondary pulse code modulation or cross interleaving at a PCM encoder 32 using the index data ID′ input through the index terminal 34 and so forth, to form re-record PCM signals P′.

These re-record PCM signals P′ obtained from the respective playback output signals A′out and B′out by the pair of sub rotary heads 3A′ and 3B′ are in the same field as and coincident in timing with the respective playback PCM signals P in the respective playback outputs Aout and Bout obtained by the regular rotary magnetic heads 3A and 3B. Therefore, by re-recording the PCM signals P′ in the respective recording areas AP of the skewed recording tracks 2A and 2B on the magnetic tape 2 by the regular rotary magnetic heads 3A and 3B, part of the data can be changed or post-written without disturbing the correspondence of the PCM audio signals with the video signals.

During the editing mode of operations, pilot signals ATF₂ contained in the respective playback outputs A′out and B′out obtained by the pair of auxiliary rotary heads 3A′ and 3B′ are supplied through a low-pass filter 30 and a changeover switch 26 to the ATF control circuit 8 to effect tracking control. In such manner, the changeover switch 26 is controlled during the edit mode of operation so that, in case of the so-called insert editing in which the record areas AV skewed record tracks 2a and 2b on the magnetic tape 2 are erased at the same time that new video signals are written in these areas by the regular rotary heads 3A and 3B, tracking control may be performed correctly on the basis of the pilot signals ATF₂ in the playback output signals A′out and B′out obtained by the pair of auxiliary rotating magnetic heads 3A′ and 3B′.

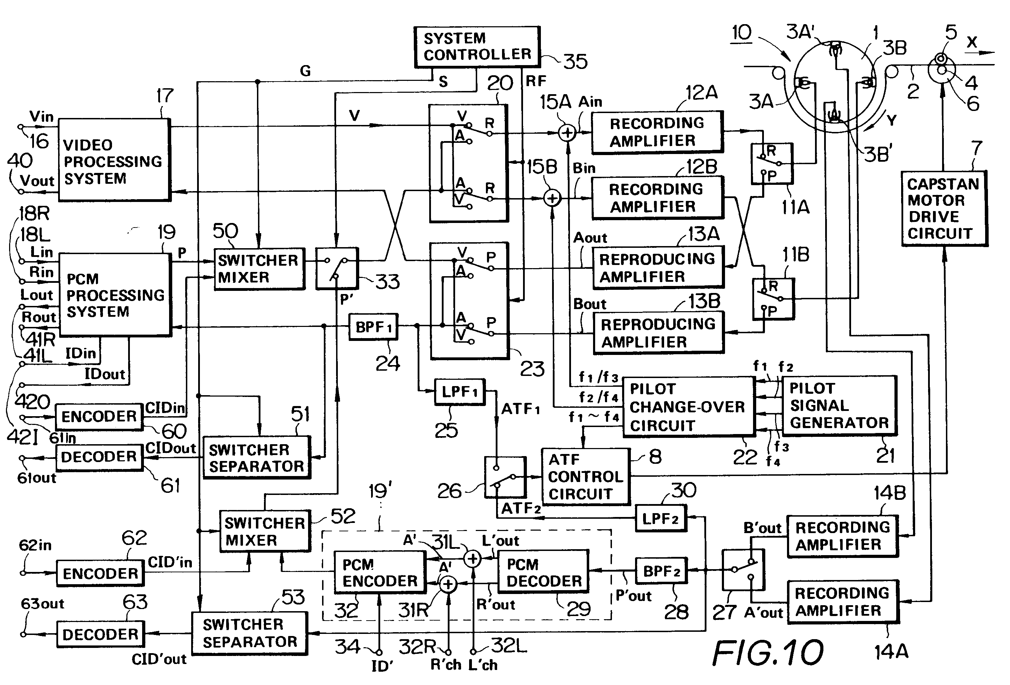

In the embodiment shown in Figs. 9 and 10, coding index signals (CID) obtained from coding of index signals, such as mode control signals similar to the index signals ID, into digital form signals, are recorded, as shown in the recording format of the magnetic tape 2 in Fig. 9, towards the video signal record area A in the audio PCM record area. During the reproducing operation, the aforementioned coding index signals (CID) are reproduced and discriminated so as to be used for controlling the reproducing mode of operation. In the block diagram of Fig. 10 showing the construction of the present embodiment, the parts or components similar to those shown in the preceding embodiment shown in Figs. 1 to 8 are indicated by the same reference numerals.

The above described VTR recording the coding index signals (CID) has been known from EP. Laid-open publication No.0209151, published on Jan. 21, 1987.

In the present embodiment, shown in Fig. 10, coding index signals CIDin supplied from an index signal encoder 60 are inserted at the trailing edge of output PCM signals P from the PCM processing system 17 by a mixer 50 provided between the system 17 and the changeover switch 33. During reproduction, coding index signals CIDout are separated by a separator 51 from playback outputs Aout and Bout and are output to a decoder 61 for deciphering their contents.

The mixer 50 and the separator 51 are controlled in their operation by respective control pulses from the system controller 35.

According to the present embodiment, in the post-recording mode of the audio PCM signals or coding index signals CID, the coding index signals CID contained in the playback signals A′out and B′out supplied from the sub rotary head 3A′ and 3B′ are separated in a separator 53, the output signals CID′out of which are supplied to a decoder 63 for deciphering the index contents. To record new index contents, if need be, in place of the original coding index signals CID, coding index signals coded in an encoder 62 are annexed to the trailing edge of the audio PCM data through the mixer 52.

As for the absolute address information indicating the tape position or the index contents concerning the time code, the outomatically updated index contents may be supplied from the input terminal 62in to the encoder 62.

In Fig. 10, the numerals 60in and 62in denote input terminals of the encoders 60 and 62, while the numerals 61out and 63out denote output terminals of the decoders 61 and 63 respectively.

While the foregoing description has been made with reference to an editing device for a so-called 8 mm VTR, the present invention is not limited to such specific embodiment. For example it may be applied to a so-called dubbing device adapted for duplicating the tape with the use of two magnetic recording and reproducing devices.

## Claims

1. Apparatus for recording an information signal comprising at least an audio signal in a plurality of successive tracks on a recording medium, provided with:
first audio signal processing means (19) for converting an original audio signal into digital form;
video signal processing means (17) for processing a video signal;
at least two main rotary heads (3A, 3B), for recording the processed video signal and said digital form audio signal on said recording medium (2);
at least two auxiliary rotary heads (3A′, 3B′) for reproducing said digital form audio signal recorded in said plurality of successive tracks (2a, 2b) on said recording medium (2), said auxiliary rotary heads (3A′, 3B′) being placed or positioned ahead of said main heads (3A, 3B) relative to the transporting direction (X) of said medium (2);
first switch means (20) for supplying said processed video signal and said digital form audio signal to said two main rotary heads (3A, 3B);
control means (35) for controlling said first switch means (20) to supply said processed video signal and said digital form audio signal to said main rotary heads (3A, 3B) so that said two main heads (3A, 3B) record said processed video signal in a main section of each track (2a, 2b) and the digital form audio signal in an over-scan section of each track (2a, 2b);
characterized by
second audio signal processing means (19′) connected to said two auxiliary rotary heads (3A′, 3B′) for reconverting the reproduced digital form audio signal into a reproduced original audio signal (L'out, R'out) and for converting said reproduced original audio signal into a re-recording digital form audio signal (P′);
new audio signal inserting means (31, 32) for mixing or replacing said reproduced original audio signal (L′out, R′out) with or by a new original audio signal (R′ch, L′ch); and
second switch means (33) for switching said digital form audio signal (P) from said first audio signal processing means (19) to said re-recording digital form audio signal (P′) from said second audio signal processing means (19′).

2. Apparatus for recording an information signal according to claim 1, characterized in that said auxiliary rotary heads (3A′, 3B′) are placed or positioned a two-field time interval or two-track space ahead of said main heads (3A, 3B).

3. Apparatus for recording an information signal according to claim 1 or 2, characterized in that said first and second audio signal processing means (19, 19′) include index signal processing means for digitizing said reproduced original audio signal and new said original audio signal together with index signals such as a mode control signal, respectively.

4. Apparatus for recording an information signal according to any one of claims 1 to 3, characterized in that said apparatus further comprises:
an index signal generating means (62) for generating a new coded index signal such as mode control signal;
index signal reproducing means (53, 63) connected to said auxiliary rotary heads (3A′, 3B′) for reproducing an original coded index signal recorded on said recording medium (2); and
mixing means (52) for mixing or replacing said reproduced original coded index signal with or by a new coded index signal generated from said generator (62) within a gap (CID) between said main section (AV) and said over-scan section (AP) of each track (2a, 2b).

## Patentansprüche

1. Gerät zur Aufzeichnung eines wenigstens ein Audiosignal in mehreren sukzessiven Spuren auf einem Aufzeichnungsmedium aufweisenden Informationssignals, bestehend aus
einer ersten Audiosignal-Verarbeitungseinrichtung (19) zur Umwandlung eines ursprünglichen Audiosignals in digitale Form,
einer Videosignal-Verarbeitungseinrichtung (17) zur Verarbeitung eines Videosignals,
wenigstens zwei Hauptdrehköpfen (3A, 3B) zur Aufzeichnung des verarbeiteten Videosignals und des Audiosignals in digitaler Form auf dem Aufzeichnungsmedium (2),
wenigstens zwei Hilfsdrehköpfen (3A′, 3B′) zur Wiedergabe des in den mehreren sukzessiven Spuren (2a, 2b) auf dem Aufzeichnungsmedium (2) aufgezeichneten Audiosignals in digitaler Form, wobei die Hilfsdrehköpfe (3A′, 3B′) relativ zur Transportrichtung (X) des Mediums (2) vor den Hauptdrehköpfen (3A, 3B) angeordnet sind,
einer ersten Schalteinrichtung (20) zum Zuführen des verarbeiteten Videosignals und des Audiosignals in digitaler Form zu den zwei Hauptdrehköpfen (3A, 3B),
einer Steuereinrichtung (35) zur Steuerung der ersten Schalteinrichtung (20) zum Zuführen des verarbeiteten Videosignals und des Audiosignals in digitaler Form zu den zwei Hauptdrehköpfen (3A, 3B) derart, daß die zwei Hauptdrehköpfe (3A, 3B) das verarbeitete Videosignal in einem Hauptabschnitt jeder Spur (2a, 2b) und das Audiosignal in digitaler Form in einem Übertastabschnitt jeder Spur (2a, 2b) aufzeichnen,
**gekennzeichnet durch**
eine mit den zwei Hilfsdrehköpfen (3A′, 3B′) verbundene Audiosignal-Verarbeitungseinrichtung (19′) zur Rückwandlung des wiedergegebenen Audiosignals in digitaler Form in ein wiedergegebenes ursprüngliches Audiosignal (L′aus, R′aus) und Umwandlung des wiedergegebenen ursprünglichen Audiosignals in ein Wiederaufzeichnungsaudiosignal (P′) in digitaler Form,
eine Neuaudiosignal-Einsetzeinrichtung (31, 32) zum Mischen oder Ersetzen des wiedergegebenen ursprünglichen Audiosignals (L′aus, R′aus) mit oder durch ein neues ursprüngliches Audiosignal (R′ch, L′ch), und
eine zweite Schalteinrichtung (33) zum Schalten des Audiosignals (P) in digitaler Form von der ersten Audiosignal-Verarbeitungseinrichtung (19) zum Wiederaufzeichnungsaudiosignal (P′) in digitaler Form aus der zweiten Audiosignal-Verarbeitungseinrichtung (19′).

2. Gerät zur Aufzeichnung eines Informationssignals nach Anspruch 1,
**dadurch gekennzeichnet,**
daß die Hilfsdrehköpfe (3A′, 3B′) um ein Zwei-Halbbild-Zeitintervall oder einen Zwei-Spur-Abstand vor den Hauptdrehköpfen (3A, 3B) angeordnet sind.

3. Gerät zur Aufzeichnung eines Informationssignals nach Anspruch 1 oder 2,
**dadurch gekennzeichnet**,
daß die erste und zweite Audiosignal-Verarbeitungseinrichtung (19, 19′) jeweils eine Indexsignal-Verarbeitungseinrichtung zum Digitalisieren des wiedergegebenen ursprünglichen Audiosignals und des neuen ursprünglichen Audiosignals zusammen mit Indexsignalen wie beispielsweise einem Modensteuersignal aufweist.

4. Gerät zur Aufzeichnung eines Informationssignals nach einem der Ansprüche 1 bis 3,
**gekennzeichnet durch**
eine Indexsignal-Erzeugungseinrichtung (62) zur Erzeugung eines neuen codierten Indexsignals, beispielsweise eines Modensteuersignals,
eine mit den Hilfsdrehköpfen (3A′, 3B′) verbundene Indexsignal-Wiedergabeeinrichtung (53, 63) zur Wiedergabe eines auf dem Aufzeichnungsmedium (2) aufgezeichneten ursprünglichen codierten Indexsignals, und
eine Mischeinrichtung (52) zum Mischen oder Ersetzen des wiedergegebenen ursprünglichen codierten Indexsignals mit einem oder durch ein von der Indexsignal-Erzeugungseinrichtung (62) erzeugtes neues codiertes Indexsignal innerhalb eines Spaltes (CID) zwischen dem Hauptabschnitt (AV) und dem Übertastabschnitt (AP) jeder Spur (2a, 2b).

## Revendications

1. Appareil pour enregistrer un signal d'informations comprenant au moins un signal audio dans une pluralité de pistes successives sur un support d'enregistrement, pourvu d'un premier dispositif de traitement de signaux audio (19) pour convertir un signal audio original sous forme numérique ;
un dispositif de traitement de signal vidéo (17) pour traiter un signal vidéo ;
au moins deux têtes tournantes principales (3A, 3B) pour enregistrer le signal vidéo traité et ledit signal audio sous la forme numérique sur ledit support d'enregistrement (2) ;
au moins deux têtes tournantes auxiliaires (3A′, 3B′) pour reproduire ledit signal audio sous forme numérique enregistré dans ladite pluralité de pistes successives (2a, 2b) sur ledit support d'enregistrement (2), lesdites têtes tournantes auxiliaires (3A′, 3B′) étant placées ou positionnées en avant desdites têtes principales (3A, 3B) par rapport à la direction de transport (X) dudit support (2);
un premier dispositif de commutation (20) pour appliquer ledit signal vidéo traité et ledit signal audio sous la forme numérique auxdites deux têtes tournantes principales (3A, 3B) ;
un dispositif de commande (35) pour commander ledit premier dispositif de commutation (20) pour fournir ledit signal vidéo traité et ledit signal audio sous forme numérique auxdites têtes tournantes principales (3A, 3B) de sorte que lesdites deux têtes principales (3A, 3B) enregistrent ledit signal vidéo traité dans une partie principale de chaque piste (2a, 2b) et le signal audio sous forme numérique dans une partie de sur-balayage de chaque piste (2a, 2b) ;
caractérisé par
un second dispositif de traitement de signal audio (19′) relié auxdites têtes tournantes auxiliaires (3A, ′3B′) pour reconvertir le signal audio reproduit sous la forme numérique en un signal audio reproduit original (L′out, R′out) et pour convertir ledit signal audio original reproduit en un signal audio de ré-enregistrement sous forme numérique (P′) ;
un nouveau dispositif d'insertion de signal audio (31, 32) pour mélanger ou remplacer ledit signal audio orignal reproduit (L′out, R′out) avec ou par un nouveau signal audio original (R′ch, L′ch) ; et
un second dispositif de commutation (33) pour commuter ledit signal audio sous forme numérique (P) à partir dudit premier dispositif de traitement du signal audio (19) sur ledit signal audio de ré-enregistrement sous forme numérique (P′) à partir dudit second dispositif de traitement du signal audio (19′).

2. Appareil pour enregistrer un signal d'informations selon la revendication 1, caractérisé en ce que lesdites têtes tournantes auxiliaires (3A′, 3B′) sont placées ou positionnées à un intervalle de temps de 2 trames ou un espace de deux pistes en avant desdites têtes principales (3A, 3B).

3. Appareil pour enregistrer un signal d'informations selon la revendication 1 ou 2, caractérisé en ce que lesdits premier et second dispositifs de traitement de signaux audio (19, 19′) comprennent un dispositif de traitement de signal d'index pour numériser respectivement ledit signal audio reproduit original et ledit signal audio original ainsi que les signaux d'index tels qu'un signal de commande de mode.

4. Appareil pour enregistrer un signal d'informations selon l'une quelconque des revendications 1 à 3, caractérisé en ce que ledit appareil comprend en outre :
un dispositif de génération de signal d'index (62) pour générer un nouveau signal d'index codé tel qu'un signal de commande de mode ;
un dispositif de reproduction de signal d'index (53, 63) relié auxdites têtes tournantes auxiliaires (3A′, 3B′) pour reproduire un signal d'index codé original enregistré sur ledit support d'enregistrement (2) ; et
un dispositif de mélange (52) pour mélanger ou remplacer ledit signal d'index codé original reproduit avec ou par un nouveau signal d'index codé généré par ledit générateur (62) dans un intervalle (CID) entre ladite partie principale (AV) et ladite partie de surbalayage (AP) de chaque piste (2a, 2b).
